# EUROPÄISCHE PATENTSCHRIFT

(11) **EP 2 420 521 B1**
(45) Veröffentlichungstag und Bekanntmachung des Hinweises auf die Patenterteilung: **23.10.2013**
(21) Anmeldenummer: 11450103.4
(22) Anmeldetag: 12.08.2011
(51) Int. Cl.: A01N 33/12, A01N 43/40, A01N 47/44, A01N 25/34, A01N 53/00, A01N 25/00, A01N 59/00, A01N 59/16, C08G 18/64, C08J 9/00, D06M 11/83, C08L 63/00, C08L 75/04

(54) **Verbundstoff aus einem Polyadditonspolymer**
Composite of a polyaddition polymer
Matière composite constituée d'un polymère de polyaddition

(30) Priorität: 17.08.2010 AT 13792010
(43) Veröffentlichungstag der Anmeldung: 22.02.2012
(73) Patentinhaber: Breckle chemicals&technics GmbH, 07570 Hohenölsen (DE)
(72) Erfinder: Rametsteiner, Karl, 4040 Linz (AT)
(74) Vertreter: Hübscher, Helmut

(56) Entgegenhaltungen:
- EP-A2- 1 817 986
- US-A1- 2007 179 210
- US-A1- 2009 012 204
- US-B1- 6 596 293
- ROMERO JORGE ET AL: "Effect of amylose, amylopectin and molecular weight or polyether polyols on the properties of polyurethane foams", POLYMER PREPRINTS, AMERICAN CHEMICAL SOCIETY, US, Bd. 39, Nr. 2, 1. Januar 1998 (1998-01-01) , Seiten 154-155, XP008115706, ISSN: 0032-3934

## Beschreibung

Die Erfindung bezieht sich auf einen Verbundstoff aus einem Polyadditionspolymer auf der Basis von Polyurethan oder Epoxidharz und wenigstens einem polymeren Naturstoff, der über reaktive Gruppen in den Polymerverband eingebunden ist.

Es ist nicht nur bekannt, Kunststoffe, und zwar sowohl Thermo- als auch Duroplaste, mit Naturfasern, beispielsweise aus Zellulose, Sisal, Hanf, Wolle, Seide und dgl., zu versetzen, um die mechanischen Eigenschaften dieser Kunststoffe zu verbessern, sondern auch diese polymeren Naturstoffe mit Hilfe ihrer reaktiven Gruppen in den Polymerverband des Verbundstoffs einzubinden, sodass sich für diese Verbundstoffe Materialeigenschaften ergeben, die von den in erheblichen Mengen eingebundenen Naturstoffen maßgeblich bestimmt werden. Diese reaktiven Gruppen werden bei Naturstoffen aus Zellulose und polymeren Sacchariden durch eine OH-Gruppe, bei Chitin oder Chitosan durch eine OH- und NH₂-Gruppe, bei Seide durch eine CO-NH-Gruppe und bei Wolle und Haaren zusätzlich durch eine HS-Gruppe und bei Naturstoffen aus Ligninen durch eine OH- sowie eine COOH-Gruppe gebildet.

Das Dokument EP 1 817 986 A2 offenbart eine Matraze aus einem PUR-Weichschaum mit einer bioziden Ausrüstung auf der Basis eines silberhaltigen Zeoliths.

Darüber hinaus ist es bekannt, Naturfasern zur mikrobiziden Ausrüstung von Geweben auf Cellulosebasis mit Hilfe einer Silanol-Gruppe als Kupplungsspacer kovalent an ein quaternäres Silan als funktionelle biologisch wirksame Gruppe zu binden.

Vorteilhaft wäre es, auch polymere Kunststoffe durch in den Polymerverbund eingebaute funktionelle Gruppen mikrobizid und akarizid ausrüsten zu können. Der Erfindung liegt somit die Aufgabe zugrunde, in den Polymerverbund funktionelle, onelle, biologisch wirksame Gruppen insbesondere zur mikrobiziden und akariziden Ausrüstung des Kunststoffs einzubauen.

Ausgehend von einem Verbundstoff der eingangs geschilderten Art, löst die Erfindung die gestellte Aufgabe dadurch, die polymeren Naturstoffe einerseits über Kupplungsspacer kovalent an funktionelle Gruppen insbesondere zur mikrobiziden und/oder akariziden Ausrüstung des Polyadditionspolymers gebunden und anderseits über ihre reaktiven Gruppen in die Matrix des Polyadditionspolymers eingebaut sind.

Der Erfindung liegt die Erkenntnis zugrunde, dass sich zwar funktionelle Gruppen für eine mikrobizide und akarizide Ausrüstung nicht unmittelbar, aber über polymere Naturstoffe in die Polymerstruktur einbinden fassen, wenn als Kunststoffe Polyadditionspolymere auf der Basis von Polyurethan oder Epoxidharz eingesetzt werden. Die mikrobizid und akarizid wirksamen funktionellen Gruppen können über Kupplungsspacer kovalent an die polymeren Naturstoffe gebunden werden, bevor diese mit den funktionellen Gruppen versehenen Naturstoffe über ihre reaktiven Gruppen in an sich bekannter Weise in die Matrix der Polyadditionspolymere eingebaut werden.

Beim Einsatz von Kunststoffen auf Polyurethanbasis werden die reaktiven Gruppen, wie OH, NH₂, COOH, CONH und HS, der Faserstoffe im Zuge der üblichen Reaktion von Isocyanat und Polyol mit der Isocyanat-Gruppe der Polyurethanformulierung in Reaktion gebracht, wobei sich ein besonders fester Verbund zwischen den mit funktionellen Gruppen versehenen, polymeren Naturstoffen und dem Polyurethan ergibt.

In ähnlicher Weise können polymere Naturstoffe, an die funktionelle Gruppen als Wirkstoffe über Kupplungsspacer gebunden sind, in die Polyadditionspolymermatrix eingebunden werden. Es tritt lediglich anstelle der isocyanatgruppe die reaktive Oxirangruppe, die mit den reaktiven Gruppen der polymeren Naturstoffe eine Polyadditionsreaktion eingeht.

Unabhängig davon, ob die polymeren Naturstoffe mit den biologisch wirksamen, funktionellen Gruppen in die Matrix eines Polyurethans oder eines Epoxidharzes eingebunden werden, hat sich in überraschenderweise herausgestellt, dass diese funktionellen Gruppen trotz eines vergleichsweise geringen Anteils der Naturstoffe im gesamten Verbundstoff wirksam werden und für eine effektive mikrobizide bzw. akarizide Ausrüstung des Verbundstoffs sorgen.

Als polymere Naturstoffe eignen sich insbesondere Zellulose, Hemizellulose, Stärke, Dextrin, Cyclodextrin, Chitin, Chitosan, Lignin, Wolle und Seide, weil diese polymeren Naturstoffe einerseits über ihre reaktiven Gruppen vorteilhaft in die Struktur der Polyadditionspolymere eingefügt und anderseits über entsprechende Kupplungsspacer kovalent mit biologisch wirksamen, funktionellen Gruppen gebunden werden können. Als funktionelle Gruppen für eine mikrobizide Ausrüstung eines erfindungsgemäßen Verbundstoffs eignet sich vor allem ein Biguanid, Polybiguanid, Polyamin, Polyaminoacrylat, Sulfonamid oder ein Silber-Kupfer-Zink-Komplex.

Mit Pyrithion, Permethrin, Teebaumöl, Abamectin, Neonicotinoid, Fibronil oder Spiromesifen als an den polymeren Naturstoff gebundene funktionelle Gruppe können Polyadditionspolymere akarizid ausgerüstet werden.

Als Kupplungsspacer zwischen dem jeweiligen polymeren Naturstoff und den biologisch wirksamen, funktionellen Gruppen können unterschiedliche Stoffe mit entsprechenden reaktiven Gruppen vorgesehen werden. So ist es beispielsweise möglich, Silane oder Siloxane mit reaktiven Gruppen, wie Halogen, Alkoxy, Epoxid oder Amin, als Kupplungsspacer einzusetzen: Als Kupplüngsspacer eignen sich aber auch 1,2,5-Triazine mit reaktiven Gruppen, wie Halogen, Alkoxy, Amin oder Hydroxy. Eine weitere Möglichkeit für Kupplungsspacer ergibt sich durch den Einsatz von Bis(2-oxazoline), wie 1,3-Phenylen-bis(2-oxazolin) oder 1,1-Carbonyl-bis(caprolactam). Diese Stoffe werden üblicherweise als sogenannte Kettenverlängerer für Polyamide oder Polyester verwendet.

Für den Fall, dass der polymere Naturstoff und/oder die biologisch wirksame funktioneller Gruppe eine Thiol- oder Carboxylgruppe aufweist, empfiehlt sich ein zumindest zweifach geladenes Kation, insbesondere Zink, Kupfer, Eisen, Beryllium oder Germanium, als Kupplungsspacer.

In den nachfolgenden, nicht einschränkenden Beispielen wird die Erfindung näher erläutert.

### Beispiel 1:

Eine Lösung von 40 g γ-Cyclodextrin in 60 g Wasser wird bei 50°C unter Rühren mit 12,6 g Sulfadiazin-Na (0,05 mol) versetzt, wobei sich ein wasserlöslicher Komplex bildet. Durch Zusatz von 0,85 g Silbernitrat in 15 ml Wasser wird das Silbersalz des Sulfadiazin/Cyclodextrin-Komplexes ausgefällt. Nach einem Filtrieren, Waschen und Trocknen wird 50,7 g eines Zwischenprodukts 1 erhalten.

### Beispiel 2:

Ein Suspension von 50 g Wollpulver in 250 ml Wasser wird mit 2 g NaOH bei 40°C während einer Zeitspanne von 30 Minuten gerührt, wobei das Na-Salz jener Thiolgruppe gebildet wird, die in der Peptidkette der Wolle von Cysteinmolekülen stammen. Durch Zusatz von 1,36 g Zinkchlorid (0,01 mol) und im unmittelbaren Anschluss daran von 3 g einer 50 %igen Pyrithionnatrium-Lösung wird ein Wirkkomplex der Struktur Wolle - Zink - Pyrithion erhalten. Nach einer Filtration, einem Waschen und Trocknen wird 51,5 g eines Zwischenprodukts 2 als weißes Pulver erhalten.

### Beispiel 3:

100 g Zellulosepulver, das durch ein Vermahlen aus nach dem Lycocellverfahren gewonnenen Buchencellulosefasern erhalten wurde, werden in 500 ml Wasser zu einer viskosen Suspension homogenisiert. Dieser Suspension werden 10 g einer 50 %igen wässrigen Lösung eines Additionsprodukts von 3-Chloropropyltrimethoxysilan mit Dimethyldodecylamin bei 40°C zugesetzt und die Mischung eine Stunde lang gerührt. Die dabei hydrolisierten Methoxylgruppen im Silan reagieren mit den Hydroxylgruppen der Zellulose zu einem stabilen, wasserunlöslichen Wirkkomplex der Struktur Zellulose - Silan - quartäres Amin. Durch Filtration, Waschen und Trocknen werden 103 g eines Zwischenprodukts 3 in Form leichter, lockerer Flocken erhalten.

### Beispiel 4:

50 g einer kommerziell erhältlichen 50 %igen, wässrigen Lösung von Polyhexamethylenbiguanidchlorwasserstoff werden in Suspension mit 500 ml Toluol in einer Dean-Stark-Apparatur durch Destillation vom wässrigen Anteil befreit, wodurch eine wasserfreie Suspension von Polyhexamethylenbiguanidchlorwasserstoff in Toluol entsteht. In diese Suspension werden 120 g Chitosanpulver und 2,25 g (0,1 mol) Phenylen-1,3-bis(oxacolin) eingetragen und zwei Stunden unter Rückfluss reagieren gelassen. Die übliche Isolierung durch Filtration, Waschen und Trocknen führt zu 135,6 g eines Zwischenprodukts 4 in Form eines braungelben Pulvers mit der Struktur Chitosan - Phenylen-1,3-dicarbonamido - Polyhexamethylenbiguanid.

### Beispiel 5:

Wie Beispiel 4, jedoch werden anstelle von Phenylen-bis(oxacolin) 2,55 g 1,1-Carbonyl-bis(caprolactam) eingesetzt. Das erhaltene Zwischenprodukt 5 weist die Struktur Chitosan - Hexamethylcarbonamido - Polyhexamethylenbiguanid.

### Beispiel 6:

1,87 g (0,01 mol) 2,6-Dichlor-4-hydroxy-1,3,5-triacin/Na-Salz in 100 ml Wasser (erhalten aus Trichlortriazin und NaOH in Wasser bei Temperaturen unter 5 °C) werden mit einer wässrigen Lösung von 1,4 g Polyhexamethylenbiguanidchlorwasserstoff in 2 g Wasser vermischt und mit 0,8 g (0,02 mol) NaOH in 10 ml Wasser bei einer Temperatur unter 5 °C versetzt und während 30 Minuten gerührt. Dabei verbindet sich ein weiteres Chloratom der Triazinstruktur mit der Biguanidgruppe. Nach Ende der Reaktionszeit wird der Lösung eine Suspension von 50 g Seidenpulver in 250 ml Wasser zugesetzt und auf 80°C erhitzt, bevor 2 ml einer 40 %igen Salzsäure zugesetzt werden. Es entsteht ein Wirkkomplex der Struktur Seide - Triazinyl - Polyhexamethylenbiguanid. Nach einer Filtration, einem Waschen und Trocknen werden 51,2 g eines Zwischenprodukts 6 in Form eines gelblichen Pulvers erhalten.

Analog zu den Beispielen 1 bis 6 wurden Wirkkomplexe als Zwischenprodukte hergestellt, wie sie nachfolgend angeführt sind.
Zwischenprodukt 7: Zellulose - Triazinyl - Polyimin
Zwischenprodukt 8: Lignin - Triazinyl - Polyhexamethylenbiguanid
Zwischenprodukt 9: Chitosan - Triazinyl - Pyrithion
Zwischenprodukt 10: Zellulose - Silan - Pyrithion
Zwischenprodukt 11: Chitosan - Silan - Pyrithion
Zwischenprodukt 12: Chitosan - Triazinyl - Polyhexamethylenbiguanid
Zwischenprodukt 13: Wolle - Triazinyl - Polyhexamethylenbiguanid
Zwischenprodukt 14: Wolle - Silan - quartäres Amin
Zwischenprodukt 15: Chitosan - Silan - quartäres Amin

Zur Herstellung eines Polyurethanweichschaums in üblicher Zusammensetzung aus Polyol, Isocyanat, Wasser, Stabilisatoren und Katalysatoren werden den Komponenten bezüglich der Gesamtmenge 1 bis 10 Gew.% der Zwischenprodukte 1 bis 15 zugesetzt, bevor die Verschäumung in bekannter Weise eingeleitet wird. Die einzelnen Proben wurden entsprechend den Nummern der eingesetzten Zwischenprodukte nummeriert, sodass die Probe 1 das Zwischenprodukt 1 und die Probe 15 das Zwischenprodukt 15 enthält. Die einzelnen Proben wurden verschiedenen mikrobiziden und akariziden Versuchen unterworfen.

Die mikrobizide Prüfung wurde gemäß JIS Z 2801:2000 mit Eschericia coli DSM 787 und Staphylococcus aneus DSM 346 unterzogen. Der Wert R der antimikrobiellen Aktivität wurde für grampositive und gramnegative Bakterien ermittelt.

Das Pilzwachstum wurde nach ISO 846 getestet und zwar sowohl nach der Methode A, die für die Bewertung der Resistenz der Probe gegenüber Pilzbefall geeignet ist, wenn keine weiteren verwertbaren organischen Materialien zugegen sind, als auch nach der Methode B, die die Situation einer Oberflächenverunreinigung der Probe in der Praxis wiederspiegelt.

Die akarizide Wirkung wurde im Langzeitversuch mittels des Wärmefluchtverfahrens (SOP Nr. 9-009) überprüft, wobei eine Probe von 10 x 10 cm mit 1 g künstlichen Hausstaub angeschmutzt, mit Milbenfutter, bestehend aus Barthaaren und Hefeextrakt versehen und in eine Petrischale gelegt wurde. Der künstliche Hausstaub wurde vorher mit Hausstaubmilben versetzt. Die Biotope wurden für vier Wochen in einer feuchten Kammer bei 70 bis 80 % relativer Luftfeuchte und bei einer Temperatur zwischen 20 und 25 °C inkubiert. Nach Ablauf der Inkubationszeit wurden die Biotope mit Klebefolie überklebt, auf eine Wärmeplatte gelegt und mit einer lichtundurchlässigen Platte abgedeckt. Die Ausgangstemperatur von 25 °C wurde kontinuierlich erhöht, bis in den Biotopen 40 °C erreicht wurde. Nach einer Stunde wurden die Folien abgezogen und auf Klarsichtfolie geklebt. Der Vorgang wurde mit einer Temperatur von 45 °C wiederholt. Die Wärmewirkung von unten bewirkt eine Verringerung der relativen Luftfeuchte und veranlasst die Milben zu einer Fluchtbewegung nach oben in kühlere und feuchtete Luftschichten. Dabei werden sie an der Klebefolie fixiert. Die Milben auf der Folie wurden mit Hilfe eines Rasters unter einem Stereomikroskop ausgezählt, wobei die angegebene Anzahl der wiedergefundenen Milben auf 100 ausgesetzte Milben bezogen ist.

Die Versuchsergebnisse sind in der nachstehenden Tabelle zusammengefasst und werden mit einer unbehandelten Probe 16 verglichen. Dabei sind in Spalte 1 die Nummer der jeweiligen Probe, in Spalte 2 der Gewichtsanteil des jeweiligen Zwischenprodukts ZwP in Gew.%, in Spalte 3 die Dichte des Polyurethanschaums in kg/m³, in den Spalten 4 und 5 der Wert R der antimikrobiellen Aktivität für grampositive (grampos.) und gramnegative (gramneg.) Bakterien, in der Spalte 6 die A- und B-Werte für den Pilzbefall (Pilz) und in der Spalte 7 die Anzahl der wiedergefundenen Milben (Milbz.) wiedergegeben.

| Probe Nr. | ZwP | Dichte | R-Wert | | Pilz | Milbenz. |
|---|---|---|---|---|---|---|
| | | | grampos. | gramneg. | | |
| 1 | 1,5 | 39,8 | 3,0 | 3,0 | A00 B01 | 10 |
| 2 | 3,0 | 40,1 | 4,0 | 4,0 | A00 B00 | 0 |
| 3 | 6,5 | 40,4 | 2,7 | 4,4 | A00 B01 | 50 |
| 4 | 5,0 | 40,1 | 3,7 | 4,0 | A01 B01 | 40 |
| 5 | 5,0 | 40,1 | 3,8 | 3,9 | A00 B01 | 30 |
| 6 | 3,0 | 40,0 | 4,0 | 4,1 | A00 - B00 | 0 |
| 7 | 6,5 | 40, 5 | 2,2 | 2,7 | A01 B11 | 10 |
| 8 | 8,5 | 42,1 | 4,1 | 4,2 | A01 B01 | 30 |
| 9 | 4,0 | 39,8 | 3,7 | 4,1 | A00 B00 | 0 |
| 10 | 5,5 | 40,0 | 2,8 | 4,1 | A00 B00 | 0 |
| 11 | 5,0 | 39,9 | 3,2 | 4,3 | A00 B00 | 0 |
| 12 | 4,0 | 39,7 | 4,1 | 4,0 | A00 B01 | 10 |
| 13 | 5,0 | 39,9 | 4,4 | 4,5 | A00 B00 | 0 |
| 14 | 4,5 | 39,9 | 3,8 | 4,0 | A00 B00 | 0 |
| 15 | 4,5 | 40,0 | 3,9 | 4,1 | A00 B01 | 10 |
| 16 | | 39,8 | 1 | 1 | A23 B34 | 100 |

Darüber hinaus wurden weitere Proben gemäß den folgenden Beispielen untersucht.

378 g Bisphenol A-Di-glyzidylether (1 mol) werden mit 250 g Talkum, 45 g Mikroglimmer, 120 g TiO₂ 1,2 g Bentonit und 60 g des Zwischenprodukts 3 fein zermahlen und mit einem Gemisch von Butylacetat und Methylisobutylketon (1:1) zu einem streichfähigen Lack verdünnt. (Feststoffgehalt 60 %).

150 g dieses Lacks werden mit 15 g Triethylentetramin in 15 ml Butylacetat als Härter versetzt, gut gemischt und der Lack innerhalb 1 Stunde auf Beton als Verschleißschicht verstrichen. Trocknung innerhalb von 3 Stunden, völlige Aushärtung nach 2 Tagen.

Ein Probeanstrich wird dem Mikrobizidtest nach JIS Z 2801 sowie dem Pilzwachstumstest gemäß ISO 846 unterworfen und zeigt, dass die Beschichtung weder Pilzwachstum noch Besiedlung mit Bakterien zulässt. Dieser Anstrich ist demnach als Belag für sterile Räume gut geeignet.

Des Weiteren wurde eine Polyurethanhartschaumrezeptur in bekannter Zusammensetzung (Polyol OHzahl 450, MDI-Isocyanat, Stabilisatoren, Katalysatoren und Cyclopentan als Treibmittel) mit je 10 Gew. % (bezogen auf Gesamtrezeptur, ausgenommen Cyclopentan) der Zwischenprodukte 2, 7, 9, 10 und 11 versetzt und zu einem Isolierschaum mit einer Dichte von 55-60 kg/m³ verschäumt.

Proben dieser Polyurethanhartschäume wurden gemäß ISO 846 auf Pilzwachstum getestet. In keinem Fall wurde Pilzwachstum auf dem Isolierstoff beobachtet, d. h. die Polyurethanhartschaumformulierungen dieser Art sind für Isolierplatten geeignet, die in Feuchtgebieten mit besonders ausgeprägter Neigung für einen Pilzbefall eingesetzt werden.

## Patentansprüche

1. Verbundstoff aus einem Polyadditionspolymer auf der Basis von Polyurethan oder Epoxidharz und wenigstens einem polymeren Naturstoff, der über reaktive Gruppen in den Polymerverband eingebunden ist, **dadurch gekennzeichnet, dass** die polymeren Naturstoffe einerseits über Kupplungsspacer kovalent an funktionelle Gruppen insbesondere zur mikrobiziden und/oder akariziden Ausrüstung des Polyadditionspolymers gebunden und anderseits über ihre reaktiven Gruppen in die Matrix des Polyadditionspolymers eingebaut sind.

2. Verbundstoff nach Anspruch 1, **dadurch gekennzeichnet, dass** als polymerer Naturstoff wenigstens ein Stoff aus der Zellulose, Hemizellulose, Stärke, Dextrin, Cyclodextrin, Chitin, Chitosan, Lignin, Wolle und Seide enthaltenen Gruppe eingesetzt ist.

3. Verbundstoff nach Anspruch 1 oder 2, **dadurch gekennzeichnet, dass** für eine mikrobizide Ausrüstung ein Biguanid, Polybiguanid, Polyamin, Polyaminoacrylat, Sulfonamid oder ein Silber-Kupfer-Zink-Komplex als funktionelle Gruppe an den polymeren Naturstoff gebunden ist.

4. Verbundstoff nach Anspruch 1 oder 2, **dadurch gekennzeichnet, dass** für eine akarizide Ausrüstung Pyrithion, Permethrin, Teebaumöl, Abamectin, Neonicotinoid, Fibronil oder Spiromesifen als funktionelle Gruppe an den polymeren Naturstoff gebunden ist.

5. Verbundstoff nach einem der Ansprüche 1 bis 4, **dadurch gekennzeichnet, dass** als Kupplungsspacer zwischen dem polymeren Naturstoff und den funktionellen Gruppen ein Silan oder Siloxan mit reaktiven Gruppen, wie Halogen, Alkoxy, Epoxid oder Amin, 1,2,5-Triazin mit reaktiven Gruppen, wie Halogen, Alkoxy, Amin oder Hydroxy, oder Bis(2-oxazolin), wie 1,3-Phenylen-bis(2-oxazolin) oder 1,1-Carbonyl-bis(caprolactam), eingesetzt ist.

6. Verbundstoff nach einem der Ansprüche 1 bis 4, **dadurch gekennzeichnet, dass** beim Einsatz eines polymeren Naturstoffs und/oder einer funktionellen Gruppe mit einer Thiol- oder Carboxylgruppe als Kupplungsspacer zumindest zweifach geladene Kationen, insbesondere Zink, Kupfer, Eisen, Beryllium oder Germanium eingesetzt ist.

## Claims

1. Composite consisting of a polyaddition polymer based on polyurethane or epoxy resin and at least one polymeric natural substance which is integrated into the polymer assembly via reactive groups, **characterised in that** on the one hand the polymeric natural substances are covalently bonded to functional groups via coupling spacers, in particular for microbicidal and/or acaricidal finishing of the polyaddition polymer and on the other hand are incorporated into the matrix of the polyaddition polymer via their reactive groups.

2. Composite as claimed in claim 1, **characterised in that** at least one substance from the group containing cellulose, hemicellulose, starch, dextrin, cyclodextrin, chitin, chitosan, lignin, wool and silk is used as the polymeric natural substance.

3. Composite as claimed in claim 1 or 2, **characterised in that** for microbicidal finishing, a biguanide, polybiguanide, polyamine, poly(aminoacrylate), sulphonamide or a silver-copper-zinc complex is bonded as a functional group to the polymeric natural substance.

4. Composite as claimed in claim 1 or 2, **characterised in that** for acaricidal finishing, pyrithione, permethrin, tea tree oil, abamectin, neonicotinoid, fibronil or spiromesifen is bonded as a functional group to the polymeric natural substance.

5. Composite as claimed in any one of claims 1 to 4, **characterised in that** a silane or siloxane with reactive groups, such as halogen, alkoxy, epoxy or amine, 1,2,5-triazine with reactive groups, such as halogen, alkoxy, amine or hydroxy, or bis(2-oxazoline), such as 1,3-phenylene-bis(2-oxazoline) or 1,1-cabonyl-bis(caprolactam) is used as the coupling spacer between the polymeric natural substance and the functional groups.

6. Composite as claimed in any one of claims 1 to 4, **characterised in that** when a polymeric natural substance and/or a functional group having a thiol or carboxyl group is used as the coupling spacer, at least doubly charged cations, in particular zinc, copper, iron, beryllium or germanium, are used.

## Revendications

1. Matière composite constituée d'un polymère de polyaddition sur la base de polyuréthane ou de résine d'époxy et au moins d'une substance naturelle polymère, qui est intégrée par le biais de groupes réactifs dans l'assemblage polymère, **caractérisée en ce que** les substances naturelles polymères sont liées par le biais de spacers d'accouplement, par covalence, à des groupes fonctionnels en particulier pour apprêt microbicide et/ou acaricide du polymère de polyaddition, d'une part, et sont incorporées par le biais de leurs groupes réactifs dans la matrice du polymère de polyaddition.

2. Matière composite selon la revendication 1, **caractérisée en ce qu'**il est utilisé en tant que substance naturelle polymère, au moins une substance issue du groupe contenant la cellulose, l'hémicellulose, l'amidon, la dextrine, la cyclodextrine, la chitine, le chitosan, la lignine, la laine et la soie.

3. Matière composite selon la revendication 1 ou 2, **caractérisée en ce que** pour un apprêt microbicide, un biguanide, un polybiguanide, une polyamine, un polyaminoacrylate, un sulfonamide ou un complexe composé de zinc, cuivre et argent, est lié en tant que groupe fonctionnel à la substance naturelle polymère.

4. Matière composite selon la revendication 1 ou 2, **caractérisée en ce que** pour un apprêt acaricide, du pyrithion, de la perméthrine, de l'huile d'arbre à thé, de l'abamectine, un néonicotinoïde, du fibronil ou du spiromésifène, est lié en tant que groupe fonctionnel à la substance naturelle polymère.

5. Matière composite selon l'une des revendications 1 à 4, **caractérisée en ce qu'**il est utilisé en tant que spacer d'accouplement entre la substance naturelle polymère et les groupes fonctionnels, un silane ou un siloxane avec des groupes réactifs, comme l'halogène, l'alkoxy, l'époxy ou de l'amine, l'1,2,5-triazine, avec des groupes réactifs, comme l'halogène, l'alkoxy, l'amine ou l'hydroxy, ou du bis-(2oxazoline), comme le 1,3-phénylène-bis-(2-oxazoline) ou du 1-1-carbonyle bis(caprolactame).

6. Matière composite selon l'une des revendications 1 à 4, **caractérisée en ce qu'**en cas d'utilisation d'une substance naturelle polymère et/ou d'un groupe fonctionnel avec un groupe carboxyle ou thiol en tant que spacer d'accouplement, au moins des cations doublement chargés, en particulier, du zinc, du cuivre, du fer, du béryllium ou du germanium, sont employés.
